Europäisches Patentamt

European Patent Office

Office européen des brevets

(11) Veröffentlichungsnummer: **0 245 625**
**B1**

(12) **EUROPÄISCHE PATENTSCHRIFT**

(45) Veröffentlichungstag der Patentschrift:
26.09.90

(21) Anmeldenummer: 87104418.6

(22) Anmeldetag: 25.03.87

(51) Int. Cl.⁵: **B23K 9/04**

(54) Verfahren zum Herstellen eines Körpers durch formgebendes Aufbauschweissen.

(30) Priorität: 09.04.86  CH 1403/86

(43) Veröffentlichungstag der Anmeldung:
19.11.87 Patentblatt 87/47

(45) Bekanntmachung des Hinweises auf die Patenterteilung:
26.09.90 Patentblatt 90/39

(84) Benannte Vertragsstaaten:
AT DE ES FR GB IT

(56) Entgegenhaltungen:
EP-A- 0 116 412
AU-B- 462 264
FR-A- 1 568 339
FR-A- 2 074 726
FR-A- 2 528 329

(73) Patentinhaber: GEBRÜDER SULZER
AKTIENGESELLSCHAFT, Zürcherstrasse 9,
CH-8401 Winterthur(CH)

(72) Erfinder: Geisseler, Max, Frauenackerstrasse 9,
CH-8356 Ettenhausen(CH)

(74) Vertreter: Sparing Röhl Henseler Patentanwälte
European Patent Attorneys, Rethelstrasse 123,
D-4000 Düsseldorf 1(DE)

## Beschreibung

Die Erfindung betrifft ein Verfahren zum Herstellen eines Körpers mit den Merkmalen des Oberbegriffs des Anspruchs 1.

Nach diesem bekannten Verfahren hergestellte Körper haben eine durchgehend homogene Wand. Es gibt Anwendungsfälle für solche Körper, in denen diese in der Wand Kanäle aufweisen sollten, durch die ein Heiz- oder Kühlmittel geleitet werden kann, um die Temperatur des Körpers oder im Falle eines Hohlkörpers, die Temperatur seines Inhaltes - zu beeinflussen. Solche Kanäle müssen dann nachträglich durch mechanische Bearbeitung, z.B. Bohren, in der Wand hergestellt werden. Dies ist einerseits sehr aufwendig und andererseits ist man in der Formgebung der Kanäle eingeschränkt.

Der Erfindung liegt die Aufgabe zugrunde, das eingangs genannte Verfahren zum Herstellen eines Körpers dahingehend weiterzuentwickeln, dass während des Aufbauschweissens des Körpers in dessen Wand kanalartige Hohlräume gebildet werden.

Diese Aufgabe wird erfindungsgemäss durch die Merkmale des Anspruchs 1 gelöst. Mit diesem Verfahren wird es also auf einfache und kostengünstige Weise möglich, Kanäle während des Aufbauens der Wand des Körpers zu erzeugen. Dabei können die Kanäle vom kreisrunden Querschnitt abweichende Querschnittsformen aufweisen, und auch der Verlauf der Kanäle in ihrer Längsrichtung ist nicht auf eine geradlinige Form beschränkt. Wenn die Abmessung des Querschnitts der Kanäle – in Richtung der Schichtdicke gemessen – grösser ist als die bei einem Durchgang der Elektrode erzeugte Schichtdicke des Aufbaumaterials, so findet ein mehrmaliges Ändern und Wiederherstellen des Schweissparameters statt, bevor der offene Kanal mit dem Formkörper versehen wird, um den Kanal beim weiteren Aufbauen der Wand zu schliessen.

Das neue Verfahren ist besonders gut geeignet für das Herstellen von zylindrischen Lagerbehältern für nukleare Brennelemente, wobei die Kanäle im Lagerbehälter mit neutronenabsorbierendem Werkstoff gefüllt werden. Die Kanäle solcher Lagerbehälter haben dabei in Umfangsrichtung eine grössere Abmessung als in radialer Richtung des Behälters.

Einige Ausführungsbeispiele der Erfindung werden in der folgenden Beschreibung anhand der Zeichnung näher erläutert. Es zeigen:

Fig. I einen schematischen Längsschnitt durch einen zylindrischen Körper, der sich nach dem erfindungsgemässen Verfahren im Aufbau befindet,

Fig. 2 eine Ansicht des Körpers in Richtung des Pfeiles A in Fig. I,

Fig. 3 eine Teilansicht des Körpers wie in Fig. 2, jedoch in einer späteren Aufbauphase,

Fig. 4 die Ansicht des Körpers in fertigem Zustand,

Fig. 5 einen schematischen Längsschnitt durch einen anderen zylindrischen Körper, der sich nach dem erfindungsgemässen Verfahren im Aufbau befindet,

Fig. 6 einen schematischen Radialschnitt durch einen kalottenartigen Körper, der sich nach dem erfindungsgemässen Verfahren im Aufbau befindet und

Fig. 7 eine Ansicht des Körpers in Richtung des Pfeiles B in Fig. 6.

Gemäss Fig. I und 2 ist zum Aufbauen eines als Lagerbehälter für nukleare Brennstoffe bestimmten Körpers I ein Grundkörper 5 in Form eines beidseitig offenen Hohlzylinders vorgesehen, der sich auf einer koaxialen Welle 6 mittels radialer Träger 7 abstützt. An der Welle 6 greifen nicht gezeigte Antriebsmittel an, die eine gesteuerte, gleichmässige Drehung der Welle 6 und somit des Grundkörpers 5 bewirken. Das das Aufbaumaterial bildende Schweissgut wird mittels einer in Fig. I schematisch angedeuteten, abschmelzenden Elektrode 4 aufgetragen, die von ebenfalls nicht gezeigten Antriebselementen parallel zur Längsachse des Grundkörpers 5 gesteuert bewegt wird. Durch entsprechendes Abstimmen der Drehbewegung der Welle 6 auf die translatorische Bewegung der Elektrode 4 werden die den Aufbaukörper I bildenden Schweissnähte schraubenlinienförmig aufgetragen, und zwar zuerst auf den Grundkörper 5 und dann schichtweise auf die bereits vorhandenen Schweissnähte. Die Elektrode 4 bildet dabei zwischen sich und dem Grundkörper 5 bzw. dem Aufbaukörper I einen Lichtbogen, wobei nach dem Unterpulver- oder Inertgas-Schweissverfahren gearbeitet wird. Auch ein Arbeiten nach dem Inertgas-Verfahren mit nichtabschmelzender Elektrode und mit gesonderter Schweissdrahtzufuhr ist möglich.

Während des Aufbauens des Körpers I werden an den Umfangsstellen, an denen Kanäle entstehen sollen, gesteuerte Aenderungen von Schweissparametern - z.B. die Umfangsgeschwindigkeit der Welle 6 und/oder die Abschmelzleistung - vorgenommen, wodurch in axialer Richtung verlaufende, zunächst offene Kanäle 2 in der Wand des Aufbaukörpers I entstehen. Es ist für die Herstellung günstig, wenn die noch offenen Kanäle 2 einen halblinsenförmigen Querschnitt aufweisen, dessen lange Achse in Längsrichtung der Schweissnähte liegt.

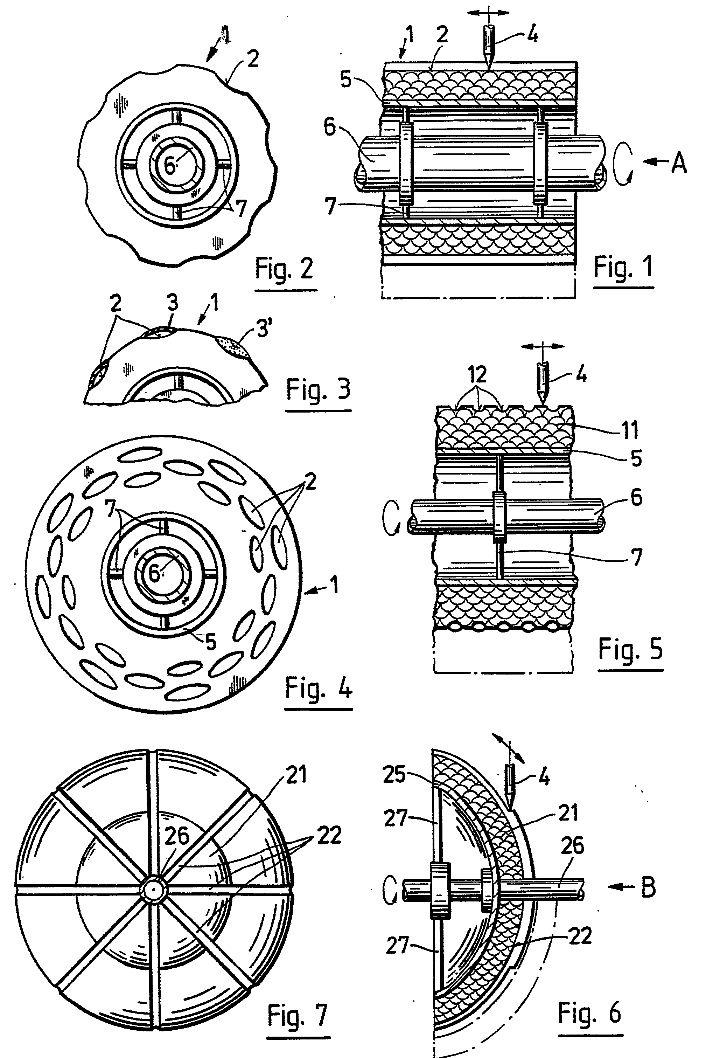

Nachdem - in Umfangsrichtung des Körpers I gesehen - eine Reihe von noch offenen Kanälen 2 entstanden ist, wird das Auftragen von Schweissgut unterbrochen und die Oberfläche der offenen Kanäle 2 mechanisch bearbeitet. Danach werden diese Kanäle mit dünnen, plattenförmigen, nach aussen gewölbten Formkörpern 3 aus Aluminium versehen (Fig. 3 links), deren Aussenseite der Kontur des offenen Kanals spiegelbildlich entsprechen. Jeder Formkörper 3 wird durch Punktschweissen am Rande des Kanals 2 befestigt. Das Auftragen von Schweissgut wird nun fortgesetzt, wobei die Schweissparameter im Bereich der Kanäle 2, so verändert werden, dass in dessen Bereich keine Materialansammlung entsteht, d.h. eine Unstetigkeit in der Wanddicke des Aufbaukörpers I im Bereich der Kanäle 2 verhindert wird. Nach Beendigung des Aufbauschweissverfahrens wird durch die nun geschlossenen Kanäle 2 ein heisses, vorzugsweise flüssiges, Medium von etwa 700°C Temperatur hindurchgepumpt, das die Formkörper 3 abschmilzt und wegtransportiert, so dass Kanäle mit geschlossenem, linsenförmigem Querschnitt und glatter Oberfläche zurückbleiben.

Fig. 3 rechts zeigt eine andere Variante des Formkörpers 3', der den Querschnitt der offenen Kanäle 2 vollständig füllt. Als Werkstoff für den Formkörper 3' kommen beispielsweise die gleichen Werkstoffe in Betracht, die für Giessereikerne verwendet werden. Die Formkörper 3' werden aus dem fertigen Aufbaukörper I auf die gleiche Weise entfernt, wie die Giessereikerne aus den Gussstücken.

Der Grundkörper 5 wird nach dem kompletten Aufbau des Körpers I evtl. durch mechanische Bearbeitung entfernt; bei Bedarf werden auch die übrigen Flächen des Körpers I mechanisch bearbeitet.

Danach werden die Kanäle 2 mit einem neutronenabsorbierenden Material gefüllt. Wie Fig. 4 zeigt, sind die Kanäle 2 in drei verschiedenen, radialen Abständen angeordnet. Die Kanäle sind in Umfangsrichtung des Körpers gegeneinander versetzt und überdecken sich teilweise. Hierdurch wird erreicht, dass jedes aus dem Inhalt des Lagerbehälters austretende Neutron mit Sicherheit von dem neutronenabsorbierenden Werkstoff in den Kanälen 2 abgefangen wird. Beide Enden des Aufbaukörpers I werden mittels aufgeschweissten Deckeln geschlossen.

Gemäss Fig. 5 ist der Körper II ein dickwandiger Zylinder, der in seiner Wand nur einen schraubenlinienförmigen Kanal I2 enthält, der zur Zylinderachse konstanten Abstand hat. Der Kanal I2 dient zum Führen eines Kühlmittels. Das Herstellen des Aufbaukörpers II entspricht demjenigen, das zu Fig. I bis 3 beschrieben wurde, indem Schweissgut schraubenlinienförmig auf den rotierenden Grundkörper 5 aufgetragen wird. Der Kanal I2 wird als zunächst offener Kanal hergestellt (Herstellphase in Fig. 5), wobei bei Annäherung der Elektrode 4 an die Kanalstelle die Schweissparameter geändert und diese nach Passieren der genannten Stelle wiederhergestellt werden. Die schraubenlinienförmigen Schweissnähte aus Aufbaumaterial haben also eine andere Steigung als der schraubenlinienförmige Kanal I2. Der offene Kanal I2 wird wiederum glatt bearbeitet und anschliessend mit dem Formkörper versehen, über den hinweg das Aufbauschweissen bis zur Fertigstellung des Körpers II fortgesetzt wird.

Der in Fig. 6 und 7 dargestellte Körper 2I bildet eine Spiegeltragplatte eines Sonnenkollektors für ein Sonnenkraftwerk. Diese Tragplatte wird grundsätzlich gleich, wie in den vorangegangenen Ausführungsbeispielen beschrieben, hergestellt. Der Grundkörper 25 weist hier die Form eines Paraboloids auf, der direkt sowie über radiale Träger 27 mit der drehbaren Welle 26 fest verbunden ist. Eine parallel zum Grundkörper 25 bewegbare Elektrode schmilzt in einem Lichtbogen zunächst auf den Grundkörper ab und dann auf das bereits aufgetragene Schweissgut. Nicht gezeigte steuerbare Antriebsmittel drehen die Welle 26 gleichmässig und bewegen die Elektrode 4 so, dass das Schweissgut spiralförmig aufgetragen wird. An den radial verlaufenden Stellen, an denen die Kanäle 22 entstehen sollen, werden die Schweissparameter geändert und wiederhergestellt, wie dies in den vorangegangenen Ausführungsbeispielen für die Kanäle 2 und I2 beschrieben wurde.

Da die Formbeständigkeit des Spiegels eines Sonnenkollektors wichtig für seine Wirksamkeit ist, sind zwecks Konstanthaltens der Temperatur der Spiegeltragplatte die Kanäle 22 im Betrieb von einem Kühl- oder Heizmedium durchströmt, dessen Menge geregelt wird.

Nach Beendigung des Aufbauschweissens wird der Grundkörper 25 vom Aufbaukörper 2I getrennt und die konkave Spiegelfläche des Aufbaukörpers poliert. Das Schweissgut, das unmittelbar auf den Grundkörper aufgetragen wird, besteht aus einem härtbaren Werkstoff, der dann - nach dem Herstellen der Spiegelfläche - praktisch unempfindlich gegen Kratzer ist. Der Grundkörper 25 besteht z.B. aus Kupfer, das die Schweisswärme gut ableitet. Durch zusätzliches Kühlen des Grundkörpers 25, z.B. mit Wasser, wird auch bei hoher Schweissleistung eine Verbindung des Grundkörpers 25 und dem Aufbaukörper 2I verhindert.

Andere Formen des Aufbaukörpers als die in Fig. I, 5 und 6 gezeigten, sind möglich, z.B. eben oder konisch. Es ist auch möglich, den Grundkörper um eine vertikale oder schräge Drehachse zu rotieren. Andere Formen für den Kanalquerschnitt und den Kanalverlauf sind ebenfalls realisierbar. Es ist auch möglich, mit mehreren Elektroden gleichzeitig - an derselben Schweissstelle oder an verschiedenen Stellen des Körpers - zu schweissen.

Als Formkörper kann auch ein Gleitschuh, z.B. aus Kupfer, verwendet werden, der der oder ggfs. den Elektroden gegen über angeordnet ist, um während des Auftragschweissens das den offenen Kanal überdeckende Schweissgut bis zu seiner Erstarrung zu stützen.

Es ist ferner denkbar, die Schweissvorrichtung mittels eines Computer so zu steuern, dass auch sehr komplizierte Kanalanordnungen - wie Evolventen und Spiralen - hergestellt werden können.

Unter "Schweissparamter" sind alle Parameter zu verstehen, die auf die Herstellung des Aufbaukörpers einen Einfluss haben, z.B. auch die relative Stellung von dem die Elektrode führenden Schweisskopf zum Aufbaukörper sowie deren gegenseitige Verschiebungen.

Der Formkörper kann auch durch chemische Zersetzung aus dem Kanal herausgelöst werden.

## Patentansprüche

1. Verfahren zum Herstellen eines Körpers durch formgebendes Aufbauschweissen, wobei das metallische Aufbaumaterial in einem elektrischen Lichtbogen zwischen einem um eine Achse mit einer vorbestimmten Umfangsgeschwindigkeit rotierenden Grundkörper und mindestens einer relativ zu diesem bewegten Elektrode mit einer vorbestimmten Abschmelzleistung abgeschmolzen wird, wonach es auf dem Grundkörper erstarrt, dadurch gekennzeichnet, dass zum Bilden mindestens eines einen geschlossenen Querschnitt aufweisenden Kanals in der aufzubauenden Wand des Körpers während der Bewegung der Elektrode mindestens einer der Schweissparameter "Umfangsgeschwindigkeit" und "Abschmelzleistung " bei Erreichen des Bereichs, in dem der zu bildende Kanal zu liegen kommen soll, geändert wird, dass, nachdem die Elektrode diesen Bereich passiert hat, der ursprüngliche Schweissparameter wieder eingestellt wird, dass der so gebildete, noch offene Kanal mit einem den restlichen Querschnitt des zu bildenden Kanals begrenzenden Formkörper versehen wird, dass danach das Aufbauschweissen fortgesetzt wird, bis die gewünschte Wanddicke des Körpers erreicht ist, und dass der Formkörper nach dem Fertigstellen des Kanals aus diesem entfernt wird.

2. Verfahren nach Anspruch 1, dadurch gekennzeichnet, dass bei einem in radialer Richtung gewölbten Verlauf des Kanalquerschnitts das Ändern und/oder das Wiederherstellen des Schweissparameters allmählich erfolgt, um beim Ueberdecken des Formkörpers mit Aufbaumaterial Unstetigkeiten in der Wanddicke des Körpers zu vermeiden.

3. Verfahren nach Anspruch 1 oder 2, dadurch gekennzeichnet, dass der noch offene Kanal vor dem Anbringen des Formkörpers mechanisch bearbeitet wird.

4. Verfahren nach Anspruch 1, dadurch gekennzeichnet, dass das Entfernen des Formkörpers durch Auflösen desselben und anschliessendes Herausspülen erfolgt.

## Claims

1. Method for producing a body by means of shaping build-up welding, in which the metallic build-up material is fused at a predetermined fusion rate in an electric arc between a base body rotating about an axis at a predetermined circumferential speed and at least one electrode which is moved relative to the latter, after which the material solidifies on the base body, characterised in that, in order to form at least one channel with a closed cross section in the body wall which is to be built up, at least one of the welding parameters "circumferential speed" and "fusion rate" is altered during the movement of the electrode when it reaches the area in which the channel which is to be formed is to be disposed, that the original welding parameter is reestablished after the electrode has passed through this area, that the channel thus formed, which is still open, is provided with a moulded body which defines the remainder of the cross section of the channel which is to be formed, that the build-up welding process is then continued until the desired wall thickness of the body is obtained, and that the moulded body is removed from the channel once the latter is finished.

2. Method according to claim 1, characterised in that, if the channel cross section has curved shape in the radial direction, the welding parameter is altered and/or reestablished gradually, so as to prevent any nonuniformity in the wall thickness of the body when the moulded body is covered with build-up material.

3. Method according to claim 1 or 2, characterised in that the channel is machined while still open before the moulded body is fitted.

4. Method according to claim 1, characterised in that the moulded body is removed by being decomposed and then flushed out.

## Revendications

1. Procédé de fabrication d'un corps par soudage de construction avec mise en forme, par lequel le métal de construction est fondu dans un arc électrique, entre un corps de base tournant autour d'un axe, à une vitesse périphérique prédéterminée, et au moins une électrode se déplaçant par rapport à celui-ci, avec un pouvoir de fusion prédéterminé, après quoi il se solidifie sur le corps de base, caractérisé en ce que, pour former au moins un canal présentant une section transversale fermée, dans la paroi à constituer du corps, on modifie au moins l'un des paramètres de soudage "vitesse périphérique" et "pouvoir de fusion", pendant le déplacement de l'électrode et lorsqu'on atteint la région dans laquelle le canal à former doit se situer, en ce qu'on rétablit le paramètre de soudage initial, après que l'électrode a dépassé cette région, en ce qu'on pourvoit le canal ainsi formé, encore ouvert, d'un corps façonné délimitant la section transversale restante du canal à former, en ce qu'on poursuit ensuite le soudage de fabrication jusqu'à ce qu'on atteigne l'épaisseur de paroi souhaitée pour le corps et en ce qu'on enlève le corps façonné du canal, après achèvement de ce dernier.

2. Procédé selon la revendication 1, caractérisé en ce que, dans le cas d'un parcours courbé radialement de la section transversale du canal, la modification et/ou le rétablissement du paramètre de soudage s'effectue progressivement, afin d'éviter des irrégularités dans l'épaisseur de la paroi du corps, lorsqu'on recouvre le corps façonné avec la matière de construction.

3. Procédé selon la revendication 1 ou 2, caractérisé en ce qu'on usine mécaniquement le canal encore ouvert, avant mise en place du corps façonné.

4. Procédé selon la revendication 1, caractérisé en ce qu'on enlève le corps façonné par dissolution de celui-ci et par lavage ultérieur.

Fig. 2

Fig. 1

Fig. 3

Fig. 5

Fig. 4

Fig. 7

Fig. 6